Europäisches Patentamt

European Patent Office

Office européen des brevets

(19)

(11) Publication number: **0 333 330**
**A1**

## (12) EUROPEAN PATENT APPLICATION

(21) Application number: 89301584.2

(22) Date of filing: 17.02.89

(51) Int. Cl.⁴: **G08G 1/09** , **H04Q 7/04**

(30) Priority: 18.02.88 GB 8803785

(43) Date of publication of application:
20.09.89 Bulletin 89/38

(84) Designated Contracting States:
AT BE CH DE ES FR GR IT LI LU NL SE

(71) Applicant: GEC-Marconi Limited
The Grove Warren Lane
Stanmore Middlesex HA7 4LY(GB)

(72) Inventor: Pudsey, David Graham
2 Eastern Road
Rayleigh Essex(GB)

(74) Representative: Cockayne, Gillian et al
The General Electric Company plc Patent
Department GEC Marconi Research Centre
West Hanningfield Road
Great Baddow, Chelmsford Essex CM2
8HN(GB)

(54) Information distribution system.

(57) In a system in accordance with the invention, a cordless telephone base station 1 or telepoint, is modified to enable navigational information and other data to be stored in stores 8, 9 and 13. The information may be accessed via a cordless telephone handset 4 and displayed at 11 or 12.

EP 0 333 330 A1

# INFORMATION DISTRIBUTION SYSTEM

This invention relates to an information distribution system and more particularly, but not exclusively, to a system which is suitable for use in road vehicle navigation.

A number of road vehicle navigation systems have been proposed but difficulties have been experienced in establishing them. The proposed systems fall into two classes. In the first class, the navigation equipment is carried by the vehicle and is autonomous, and in the second class, communication is required between co-operating fixed installations and on-board equipment.

An autonomous navigation system is one in which apparatus carried by a vehicle functions without reference to external equipment. In one such system, the apparatus includes a digitised road map of the country which is used in conjunction with compass and odometer information to give navigational directions. Even a simple autonomous system is complex and hence relatively expensive, and thus only a small market exists for systems of this type.

In the second class of navigation system, equipment carried by the vehicle co-operates with a network of transponders distributed over a region. Although the apparatus carried by the vehicle itself may be cheaper than that associated with an autonomous system, complicated and expensive computer controlled equipment is necessary to enable the system to be implemented. Also, until an extensive infrastructure exists covering at least part of the country, this type of system is not viable.

The present invention seeks to provide an information distribution system which is relatively easy and inexpensive to implement.

According to the invention there is provided an information distribution system comprising: a cordless telephone base station which includes storage means arranged to store navigational information additional to that required to operate its telephone service; and means capable of accessing the stored information.

Although the invention is particularly applicable to the distribution of information relating to navigation, it should be understood that in its broadest aspect the invention is applicable to the distribution of all classes of information.

A great advantage of a system in accordance with the invention is that, when the second generation of cordless telephones (known as CT2) become available, there will be a rapid expansion in what are termed "telepoints". A telepoint consists of one or more base stations fitted in a public place for use by members of the public carrying a portable cordless telephone handset. Telepoints need not necessarily form part of a CT2 network; they may also conform to other operating specifications. It is envisaged that an extensive network of cordless telephone base stations will be set up. These may include stored information such as weather reports, local traffic information and any other data which people may wish to access.

Where the information relates to navigation, the base stations can be incorporated into a navigation system, thus avoiding the need to set up a dedicated nationwide distribution of transponders for use in a navigation system alone. The navigational information stored at the base station may be merely a road junction number for example, but more usefully it would include detailed information regarding a junction where the base station is located and the most favourable road to take for a given destination. There may be more than one base station at a junction or its approaches, particularly where the road layout is complicated. Where the information is not related to navigational uses, it may still be advantageous to locate the base station near a road junction for easy access by vehicle occupants of stored information.

It is preferred that the means for accessing the stored information is a cordless telephone handset. As the CT2 network becomes well established, many vehicles will carry a CT2 handset for use as a telephone. This is highly advantageous in establishing, in particular, a navigation system in accordance with the invention as many people already owning handsets for telephone use would be willing to subscribe to a navigation system which would not require the purchase of additional equipment.

It is preferred that the means for accessing the stored additional information is connectable to an aerial carried by a road vehicle, thus increasing the range over which the information may be accessed and enabling amplification of any audible information received from the base station. It is also preferred that the means for accessing the information is connectable to a display device which is arranged to visually display the accessed information, for example on a vehicle dash-board, although the means for accessing may itself incorporate a display. In a particularly advantageous embodiment of the invention, means are included which are capable of audibly conveying accessed information to an operator. This may be achieved by including a voice synthesiser at the telephone base station. The person requiring information from the base station would simply interrogate the base station using the means for accessing the stored information and the required information would be transmitted to him both in visual and audible form.

It is preferred that the stored information at the base station is more detailed for local surroundings than for more distant locations. This permits a relatively small storage capacity to be used whilst ensuring that adequate data is available to an enquirer. This feature is particularly advantageous where the information is navigational information, giving details of preferred routes to a desired destination, for example.

It is preferred that means are included for updating the stored information. This may then be used to take into account any road-works or other problems or changes which might arise. Advantageously, the stored information is up-dated by a remote communication terminal.

Preferably, means are included for transmitting to the base station information regarding a desired destination. This may then be used by the base station to provide information concerning a correct route for a vehicle to follow. However, the base station which holds navigational data might merely transmit information relating to all roads at a junction rather than transmitting only the information specific to a particular destination.

Advantageously, the information to be accessed is represented by a numerical code, as this permits a conventional telephone handset to be used. Possibly, the code may be the post code of a destination, but advantageously, the numerical code is representative of a map reference where the information is related to a destination. If it is wished to provide for an alpha input, the handset may be fitted with an additional digital input/output terminal to be used with an external key-pad. The code may be input into the accessing means and stored for easy retrieval when it is wished to interrogate a base station.

It is preferred that means are included at the base station for automatically logging each accession of the stored information. This enables provision to be made for charging for use of the service.

It is preferred that a plurality of base stations are distributed as a network over a region. It may be advantageous that where the stored information is up-dated at one base station, it is automatically up-dated at another.

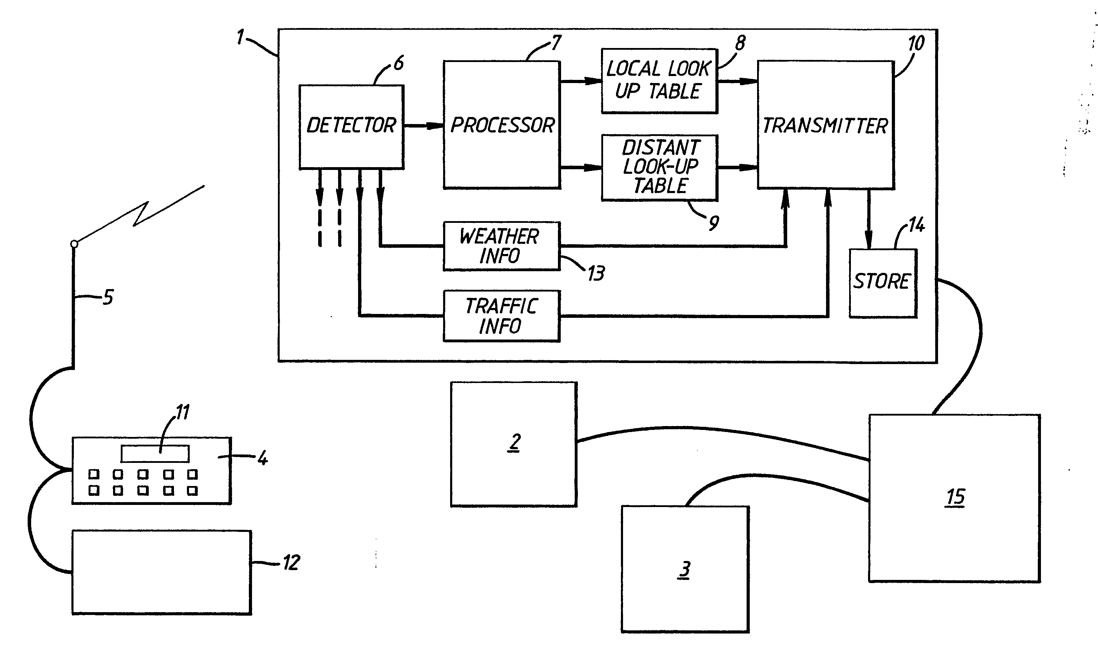

One way in which the invention may be performed is now described by way of example, with reference to the accompanying drawing, in which the sole Figure schematically illustrates an information distribution system in accordance with the invention.

With reference to the Figure, a system in accordance with the invention which can be used for road vehicle navigation and to distribute information relating to other matters comprises a plurality of cordless telephone base stations 1, 2 and 3, only some of which are shown, which are distributed throughout the country. Each base station 1, 2 and 3 is a telepoint which has been modified to incorporate a store containing navigational and other additional information to that which it requires for its operation as part of the telephone service, a micro-processor and a voice-synthesizer. There may be more than one base station associated with a junction, this being especially useful where the road layout is complex.

When a driver approaches a junction which is indicated, for example by a symbol on a road sign, to have a modified telepoint, he may access the stored information to determine which road to take if he requires navigational assistance or other additional information held at the telepoint. In this embodiment of the invention, the means for accessing the stored information is a cordless telephone handset 4, but it could be a dedicated unit.

For navigational use, at the beginning of his journey, the driver keys in a code on the handset 4 representing his desired destination, the code being numerical and based on map references. When he reaches a junction having a base station 1, he presses a button which causes the stored destination code and a handset identification code to be transmitted, communication being established between the handset 4 and the base station 1 via the vehicle's radio aerial 5. The transmission also includes an indication that destination information is required. This is detected at 6 and applied to the storage and processing circuits concerned with navigation data. A processor 7 determines whether the destination required is a local one, using the first two digits of the destination code. If it is, the code is applied to a look-up table 8 which lists destination codes against appropriate local navigational information, the whole code being used to retrieve the stored data. If the destination is distant, only the first two digits of the code are required to retrieve the requested information from a second look-up table 9. The accessed information is passed to a transmitter 10 which includes a voice synthesiser. The transmission is recieved by the handset 4 in the vehicle and is presented audibly and visually via a display 11 provided on the handset 4. In this equipment, the handset 4 is also connected to a larger display 12 on the dash-board of the vehicle for the convenience of the driver. The driver than uses the retrieved information to select the correct turning.

The base station 1 also stores other types of information. If a person wishes to access weather report information, he keys in the appropriate code on the handset 4. The detector 6 at the base station 1, on receipt of this code, directs the information request to another storeage means 13, and again, the retrieved data is transmitted at 10.

The base station 1 records the identification code associated with the handset 4 at a store 14 when data is accessed. This may be recorded on a tape which is collected and used to calculate charges for use of the system, or may be transmitted to a remote communication terminal 15.

Road works and accidents for example, may alter the best choice of routes to a given destination. The remote communication terminal 15 included in the system may be such that it is able to access the look-up tables 8, 9 and 13 to enter revised and up-dated information. In a more sophisticated version of the system, information sent to one base station 1 which would also affect the directions given by a second base station 2 is automatically also transmitted to the second base station 2. In one version of the system, each base station is able to transmit information to the remote communication terminal 15. For example, some indication of the number of vehicles travelling along a particular route may be given to enable any appropriate changes in directional information to be made.

Claims

1. An information distribution system comprising: a cordless telephone base station (1,2,3) which includes storage means (8,9,13) arranged to store information additional to that required to operate its telephone service; and means (4) capable of accessing the stored additional information.

2. A system as claimed in claim 1 wherein the means capable of accessing the stored additional information is a cordless telephone handset (4).

3. A system as claimed in claim 1 or 2 wherein the stored additional information (8,9) is navigational information.

4. A system, as claimed in claim 3 wherein the navigational information concerns road vehicle navigation.

5. A system as claimed in any preceding claim wherein the base station is located in the vicinity of a road junction.

6. A system as claimed in claim 5 and including a plurality of base stations in the vicinity of a road junction.

7. A system as claimed in any preceding claim wherein the means (4) capable of accessing the stored information is connectable to an aerial (5) carried by a road vehicle.

8. A system as claimed in any preceding claim wherein the means (4) capable of accessing the information includes a display device (11) arranged to visually display accessed information.

9. A system as claimed in any preceding claim wherein the means (4) capable of accessing the information is connectable to a display device (12) arranged to visually display accessed information.

10. A system as claimed in any preceding claim and including means (10) capable of audibly conveying accessed information to an operator.

11. A system as claimed in any preceding claim wherein the base station includes a voice synthesizer (10) arranged to articulate accessed information.

12. A system as claimed in any preceding claim wherein the stored additional information is more detailed for local information (8) than for that relating to more distant locations (9).

13. A system as claimed in any preceding claim and including means (15) for up-dating the stored additional information.

14. A system as claimed in claim 13 wherein the stored information is up-dated by means of a remote communication terminal (15).

15. A system as claimed in any preceding claim and including means (4) for transmitting to the base station information regarding a desired destination.

16. A system as claimed in any preceding claim wherein the information to be accessed is represented by a numerical code.

17. A system as claimed in any preceding claim wherein the means (4) capable of accessing includes storage means for storing data regarding information to be accessed.

18. A system as claimed in any preceding claim and including means (14) for automatically logging each accession of the stored information.

19. A system as claimed in any preceding claim and including means for transmitting to the base station an identification code associated with the means capable of accessing.

20. A system as claimed in any preceding claim wherein the base station includes means for transmitting information to a remote communication terminal (15).

21. A system as claimed in claim 20 wherein information transmitted to the remote communication terminal (15) includes identification codes associated with means for accessing stored information.

22. A system as claimed in claim 20 or 21 wherein information transmitted to the remote communication terminal (15) includes data relating to traffic travelling to a particular destination.

23. A system as claimed in any preceding claim and including a plurality (1,2,3) of base stations distributed as a network over a region.

24. A system as claimed in claim 23 wherein up-dated information to one of the base stations is automatically up-dated in another.

LOCAL LOOK UP TABLE 8

DISTANT LOOK-UP TABLE 9

TRANSMITTER 10

STORE 14

PROCESSOR 7

DETECTOR 6

WEATHER INFO 13

TRAFFIC INFO

1

2

3

15

4

5

11

12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 199 266 (SIEMENS)<br>* Whole document * | 1-7,13-15,20,22,23 | G 08 G 1/09<br>H 04 Q 7/04 |
| Y | | 8-10,18,19,21 | |
| | --- | | |
| Y | GB-A-2 163 282 (KWAKU BOATENG)<br>* Abstract; page 2, lines 42-65 * | 8,9,10 | |
| | --- | | |
| Y | EP-A-0 110 099 (BOSCH)<br>* Abstract; claims 1,13-16 * | 18,19,21 | |
| | --- | | |
| X | PATENT ABSTRACTS OF JAPAN, vol. 10, no. 213 (E-422)[2269], 25th July 1986; & JP-A-61 52 040 (NEC CORP.) 14-03-1986<br>* Whole document * | 1,2,8 | |
| | --- | | |
| A | NACHRICHTENTECHNISCHE ZEITUNG (NTZ), vol. 40, no. 6, June 1987, pages 444-449; K. EHLERS: "Das Autoradio als Kern eines mobilen Kommunikationszentrums"<br>* Page 448, left-hand column, line 33 - page 449, right-hand column, last line * | 1-10 | **TECHNICAL FIELDS SEARCHED (Int. Cl.4)**<br><br>G 01 C<br>G 08 G<br>H 04 Q<br>H 04 B |

The present search report has been drawn up for all claims

| Place of search | Date of completion of the search | Examiner |
|---|---|---|
| THE HAGUE | 23-05-1989 | KOLBE W.H. |